# FASCICULE DE BREVET EUROPEEN

(11) **EP 3 909 712 B1**
(45) Date de publication et mention de la délivrance du brevet: **21.02.2024**
(21) Numéro de dépôt: 21167709.1
(22) Date de dépôt: 09.04.2021
(51) Int. Cl.: B23K 1/00, B23K 1/008, B23K 1/19, F28D 9/00, B23K 101/14

(54) **PROCÉDÉ DE FABRICATION D'UN ÉCHANGEUR DE CHALEUR COMPORTANT UNE SONDE DE TEMPÉRATURE ET ÉCHANGEUR DE CHALEUR**
VERFAHREN ZUR HERSTELLUNG EINES WÄRMETAUSCHERS, DER EINE TEMPERATURSONDE UMFASST UND WÄRMETAUSCHER
METHOD FOR MANUFACTURING A HEAT EXCHANGER COMPRISING A TEMPERATURE SENSOR AND HEAT EXCHANGER

(30) Priorité: 15.05.2020 FR 2004867
(43) Date de publication de la demande: 17.11.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: SEIWERT, Jacopo, 78350 Les Loges en Josas (FR); WAGNER, Marc, 78350 Les Loges en Josas (FR); CREMIEUX, Marie-Adelaide, 78350 Les Loges en Josas (FR); BELMEKKI, Younes, 78350 Les Loges en Josas (FR)
(74) Mandataire: Air Liquide

(56) Documents cités:
- EP-A2- 1 319 890
- DE-A1-102016 000 246
- US-A1- 2013 075 054
- US-A1- 2018 283 816

## Description

La présente invention est relative à un procédé de fabrication d'un échangeur de chaleur du type à plaques brasées comportant au moins une sonde de température permettant de réaliser des mesures de températures et/ou de flux thermiques au sein de l'échangeur, ainsi qu'à un échangeur de chaleur permettant de réaliser ces mesures.

La présente invention trouve notamment application dans le domaine de la séparation de gaz par cryogénie, en particulier de la séparation d'air par cryogénie (connue sous l'acronyme anglais « ASU » pour unité de séparation d'air) exploitée pour la production d'oxygène gazeux sous pression. En particulier, la présente invention peut s'appliquer à la fabrication d'un échangeur de chaleur qui vaporise un débit liquide, par exemple de l'oxygène liquide, de l'azote et/ou de l'argon par échange de chaleur avec un débit gazeux, par exemple l'air ou l'azote.

La présente invention peut également s'appliquer à un échangeur de chaleur qui vaporise au moins un débit de mélange liquide-gaz, en particulier un débit de mélange à plusieurs constituants, par exemple un mélange d'hydrocarbures, par échange de chaleur avec au moins un autre fluide, par exemple du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs sont formés d'un ensemble de plaques parallèles entre lesquelles sont généralement insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique.

Lors de la fabrication de l'échangeur, les plaques, les éléments intercalaires à ailettes et les autres éléments constitutifs de l'échangeur sont plaqués les uns contre les autres et sont ensuite liés entre eux par brasage dans un four sous vide à des températures qui peuvent être comprises entre 550 et 900 °C.

Du fait de leur compacité et de leur construction monolithique, il est très difficile d'effectuer des mesures locales de températures ou de flux thermiques au sein de ces échangeurs brasés. Ainsi, dans l'immense majorité des procédés dans lesquels ils sont implantés, l'opérateur n'a accès qu'à la puissance thermique totale échangée entre fluides, grâce à un bilan énergétique réalisé entre l'entrée et la sortie de chaque fluide. Cela complique fortement la caractérisation de ces échangeurs et ne permet pas, par exemple, de mesurer isolément le coefficient d'échange thermique de chacun des passages.

En utilisation, l'absence de données locales limite les possibilités de contrôle du procédé. En particulier, certains phénomènes physiques particuliers qui peuvent avoir lieu au sein de l'échangeur, tels que des changements de phase ou des réactions chimiques, se traduisent par une variation locale du flux thermique ou de la température, qui dépend aussi de la position considérée dans l'échangeur.

La mesure locale de températures ou de flux thermiques permettrait de détecter in situ de mauvaises conditions de fonctionnement des échangeurs : mal-distribution des fluides, diminution de la performance de certaines zones de l'échangeur due par exemple à des phénomènes de bouchage ou de distillation locale. Il serait aussi utile de bénéficier de mesures locales de températures ou de flux thermiques pour surveiller l'évolution des performances des échangeurs à plaques et ailettes au cours de leur durée de vie.

Face à ces besoins, on constate que les solutions de mesure de températures existantes ne donnent pas entière satisfaction, notamment du fait de la complexité des pièces de maintien utilisées, ou de leur mise en oeuvre.

Des méthodes de mesure de températures « in situ » existent, mais elles ne permettent actuellement que de mesurer la température au sein des fluides. Elles sont de plus intrusives, car elles modifient les écoulements des fluides au sein des passages d'échange. Et parce qu'elles ne sont pas prévues dès la construction de l'échangeur, leur mise en oeuvre est relativement complexe, coûteuse et peu robustes.

Il existe des méthodes de mesure de flux thermiques mais elles nécessitent d'intercaler une sonde entre les passages de l'échangeur. Il n'est plus possible de braser l'échangeur en une pièce, ce qui fait perdre l'essentiel de ses avantages. De plus, la sonde représente également un surcoût important et rajoute nécessairement une résistance thermique qui n'est pas compatible avec les coefficients d'échange thermiques typiques des échangeurs considérés. Enfin, cette solution est difficilement envisageable à une échelle industrielle, dès que les échangeurs possèdent un nombre conséquent de passages, notamment du fait de la difficulté d'assemblage.

Par ailleurs, on connaît du document JP-A-2014169809 (qui représente la base du préambule des revendications 1 et 13) un échangeur de chaleur comprenant une sonde de température qui est insérée dans un tube, le tube étant lui-même inséré dans des rainures pratiquées dans une plaque de l'échangeur. Le tube est brasé entre deux plaques puis la sonde est introduite dans le tube. Cette méthode pose plusieurs problèmes. La présence du tube augmente nécessairement la résistance thermique entre la plaque, dont on souhaite mesurer la température, et la sonde, ce qui dégrade la précision de la mesure. Le tube augmente également la place nécessaire à l'introduction de la sonde, ce qui augmente le caractère intrusif de la méthode.

La présente invention a notamment pour but de résoudre tout ou partie des problèmes mentionnés ci-avant, en proposant un procédé de fabrication d'un échangeur de chaleur à plaques brasées permettant de réaliser au sein de l'échangeur des mesures de températures locales et/ou des mesures de flux thermiques de façon plus précise, à la fois en termes de valeur mesurée et de position dans l'échangeur, et ce sans perturber le fonctionnement de l'échangeur, ni augmenter son encombrement.

Dans ce but, l'invention a pour objet un procédé de fabrication d'un échangeur de chaleur du type à plaques et ailettes brasées comprenant les étapes suivantes :
a) empiler avec espacement un ensemble de plaques parallèlement entre elles et à une direction longitudinale de façon à définir entre lesdites plaques une pluralité de passages adaptés pour l'écoulement suivant la direction longitudinale d'un premier fluide à mettre en relation d'échange thermique avec au moins un deuxième fluide, lesdites plaques étant délimitées par une paire de bords longitudinaux s'étendant suivant la direction longitudinale et une paire de bords latéraux s'étendant suivant une direction latérale perpendiculaire à la direction longitudinale,
b) former au moins une des plaques empilées à l'étape a) en superposant, suivant une direction d'empilement perpendiculaire aux directions longitudinale et latérale, au moins un premier produit plat et un deuxième produit plat l'un sur l'autre, au moins l'un des premier et deuxième produits plats comprenant au moins une rainure s'étendant parallèlement aux plaques et débouchant vers l'extérieur de l'empilement par au moins une ouverture d'un bord latéral ou longitudinal,
c) agencer au moins une cale amovible dans la rainure,
d) braser l'ensemble de plaques, y compris le premier produit plat sur le deuxième produit plat,
e) retirer la cale amovible de la rainure par l'ouverture,
f) introduire au moins une sonde de température dans la rainure.

Selon le cas, l'échangeur selon l'invention peut comprendre l'une ou plusieurs des caractéristiques ci-dessous :
- le premier produit plat comprend une première paire de surfaces opposées et le deuxième produit plat comprend une deuxième paire de surfaces opposées, le premier produit plat comprenant au moins une rainure débouchant au niveau de celle des surfaces de la première paire orientée du côté du deuxième produit plat.
- le deuxième produit plat comprend au moins une rainure agencée en regard de ladite au moins une rainure du premier produit plat et débouchant au niveau de celle des surfaces de la deuxième paire orientée du côté du premier produit plat.
- à l'étape b), ladite au moins une plaque est formée en superposant un premier produit plat, un deuxième produit plat et au moins un produit plat supplémentaire les uns sur les autres, le deuxième produit plat étant agencé entre le premier produit plat et ledit produit plat supplémentaire.
- le deuxième produit plat comprend au moins une rainure débouchant d'une part au niveau de celle des surfaces de la deuxième paire orientée du côté du premier produit plat et débouchant d'autre part au niveau de celle des surfaces de la deuxième paire orientée du côté du produit plat supplémentaire.
- le deuxième produit plat comprend au moins deux rainures agencées à des hauteurs différentes suivant la direction d'empilement, l'une des deux rainures débouchant au niveau de la surface de la deuxième paire orientée du côté du premier produit plat et l'autre débouchant au niveau de la surface de la deuxième paire orientée du côté du produit plat supplémentaire.
- les rainures de la paire sont décalées l'une par rapport à l'autre dans un plan parallèle aux plaques.
- des évidements sont pratiqués dans le premier produit plat et/ou le deuxième produit plat de part et d'autre de ladite au moins une rainure.
- des bossages sont aménagés sur la paroi interne de ladite au moins une rainure de façon à réduire localement la section transversale de la rainure.
- ladite au moins une rainure débouche d'une part par une ouverture d'un bord longitudinal ou latéral et d'autre part par une ouverture du bord longitudinal ou latéral opposé, de préférence lesdites ouvertures sont agencées sur deux bords longitudinaux opposés.
- au moins l'un des premier et deuxième produits plats comprend au moins une pluralité de rainures se rejoignant au niveau du bord longitudinal ou latéral (4b) opposé pour y déboucher par une ouverture commune, de préférence les rainures présentent, en coupe longitudinale dans un plan parallèle aux plaques, un profil ayant au moins une portion de forme curviligne.
- le premier produit plat et le deuxième produit plat comprennent sur, au moins une de leurs surfaces opposées, un revêtement ou une feuille d'agent de brasage ayant une température de fusion prédéterminée, la cale amovible étant formée en tout ou partie d'un premier matériau ayant une température de fusion supérieure à ladite température prédéterminée ou la cale amovible étant recouverte en tout ou partie d'un produit de revêtement configuré pour former, à l'étape d), une barrière de diffusion de l'agent de brasage dans le premier matériau de la cale amovible.
- l'étape e) comprend au moins l'une des sous-étapes suivantes : i) appliquer une force de traction à la cale amovible de façon à lui imposer un mouvement de translation vers l'extérieur de l'empilement, ii) imposer un mouvement de torsion à la cale amovible de façon à entraîner une déformation d'au moins une partie de la cale amovible, iii) chauffer ou refroidir la cale amovible.
- après ou simultanément à l'étape f), on introduit un deuxième matériau dans la rainure puis on fond le deuxième matériau de façon à remplir au moins une partie de l'espace autour de la sonde de température, de préférence le deuxième matériau ayant une température de fusion inférieure ou égale à 500 °C, de préférence inférieure ou égale à 200 °C, de préférence encore inférieure ou égale à 100 °C.

En outre, l'invention concerne un échangeur de chaleur du type à plaques et ailettes brasées comprenant un ensemble de plaques parallèles entre elles et à une direction longitudinale de façon à définir entre lesdites plaques une pluralité de passages adaptés pour l'écoulement d'un premier fluide à mettre en relation d'échange thermique avec au moins un deuxième fluide, lesdits plaques étant délimitées par une paire de bords longitudinaux s'étendant suivant la direction longitudinale et une paire de bords latéraux s'étendant suivant une direction latérale perpendiculaire à la direction longitudinale, au moins une des plaques étant formée par au moins un premier produit plat et un deuxième produit plat brasés et superposés l'un sur l'autre suivant une direction d'empilement perpendiculaire aux directions longitudinale et latérale, au moins l'un des premier et deuxième produits plats comprenant au moins une rainure s'étendant parallèlement aux plaques et débouchant vers l'extérieur de l'empilement par au moins une ouverture d'un bord latéral ou longitudinal, de préférence par au moins une ouverture d'un bord longitudinal, au moins une sonde de température étant agencé dans la rainure , un deuxième matériau ayant une température de fusion inférieure ou égale à 500 °C, de préférence inférieure ou égale à 200 °C, de préférence encore inférieure ou égale à 100 °C, étant agencé autour d'au moins une partie de la sonde, ladite rainure étant dépourvue de tout autre moyen de maintien de ladite sonde dans la rainure.

En particulier, ladite au moins une plaque peut être formée en superposant un premier produit plat, un deuxième produit plat et au moins un produit plat supplémentaire les uns sur les autres, le deuxième produit plat étant agencé entre le premier produit plat et ledit produit plat supplémentaire, le deuxième produit plat comprenant au moins deux rainures agencées à des hauteurs différentes suivant la direction d'empilement avec chaque rainure comprenant au moins une sonde, l'une des deux rainures débouchant au niveau de la surface de la deuxième paire orientée du côté du premier produit plat et l'autre débouche débouchant au niveau de la surface de la deuxième paire orientée du côté du troisième produit plat supplémentaire.

Par ailleurs, au moins l'un des premier et deuxième produits plats peut comprendre au moins deux rainures débouchant sur des bords latéraux ou longitudinaux opposés, chaque rainure étant inclinée d'un angle compris entre 0 et 90°, de préférence entre 10° et 80° par rapport au bord latéral ou longitudinal sur lequel ladite rainure débouche.

L'invention va maintenant être mieux comprise grâce à la description qui va suivre, donnée à titre d'exemple non limitatif et faite en référence aux figures ci-annexées parmi lesquelles :
Fig. 1 est un vue tridimensionnelle d'un échangeur à plaques brasées pouvant être fabriqué par un procédé selon l'invention,
Fig. 2 schématise différents mode de réalisation de produits plats et de rainures selon l'invention,
Fig. 3 schématise d'autres mode de réalisation de produits plat et de rainures selon l'invention,
Fig. 4 schématise d'autres mode de réalisation de produits plat et de rainures selon l'invention,
Fig. 5 schématise d'autres mode de réalisation de produits plat et de rainures selon l'invention,
Fig. 6 schématise un produit plat comportant une pluralité de rainures selon un mode de réalisation de l'invention.
Fig. 7 schématise un produit plat selon un autre mode de réalisation de l'invention.

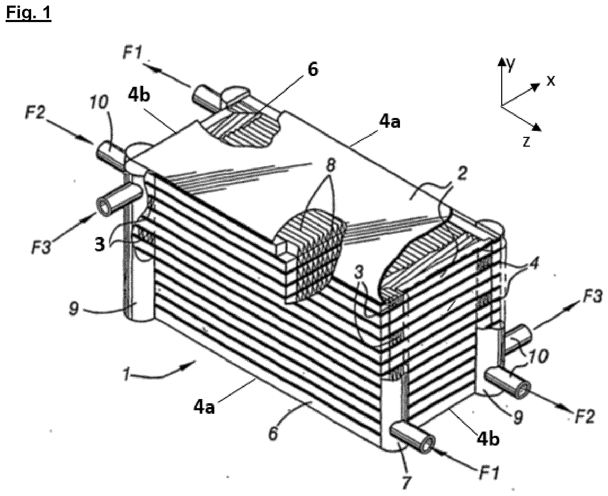

La Figure 1 représente un échangeur de chaleur 1 du type à plaques et ailettes brasées comprend un empilement de plaques 2 qui s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement. Elles forment ainsi entre elles plusieurs ensembles de passages 3, certains passages étant prévus pour l'écoulement d'un premier fluide F1, et d'autres passages prévus pour l'écoulement d'au moins un autre fluide F2, F3 à mettre en relation d'échange de chaleur indirect avec F1 via les plaques 2. La direction latérale x est orthogonale à la direction longitudinale z et parallèle aux plaques 2. Les fluides s'écoulent de préférence dans la longueur de l'échangeur parallèlement à la direction longitudinale z.

De préférence, chaque passage a une forme parallélépipédique et plate. L'écart entre deux plaques 2 successives, correspondant à la hauteur du passage, mesurée suivant la direction d'empilement y des plaques 2, est petit devant la longueur et la largeur de chaque plaque successive. La direction d'empilement y est orthogonale aux plaques.

Les passages 3 sont bordés par des barres de fermeture 6 qui n'obturent pas complètement les passages mais laissent des ouvertures libres pour l'entrée ou la sortie des fluides correspondants. Les plaques 2 sont délimitées par des bords périphériques 4 qui sont de préférence parallèles deux à deux. Les bords périphériques 4 comprennent une paire de bords longitudinaux 4a s'étendant suivant la direction longitudinale z et une paire de bords latéraux 4b s'étendant suivant la direction latérale x.

L'échangeur 1 comprend des collecteurs de forme semi-tubulaire 7, 9 munis d'entrées et de sorties 10 pour l'introduction des fluides dans l'échangeur 1 et l'évacuation des fluides hors de l'échangeur 1. Ces collecteurs présentent des ouvertures moins larges que les passages. Des zones de distribution agencées en aval des collecteurs d'entrée et en amont des collecteurs de sortie servent à canaliser de façon homogène les fluides vers ou depuis toute la largeur des passages.

De préférence, au moins une partie des passages 3 comprend des éléments intercalaires 8 à ailettes qui s'étendent avantageusement suivant la largeur et la longueur des passages de l'échangeur, parallèlement aux plaques 2. Dans l'exemple illustré, les éléments intercalaires 8 comprennent des ondes d'échange thermique sous forme de tôles ondulées. Dans ce cas, on appelle « ailettes » les jambes d'onde qui relient les sommets et les bases successifs de l'onde. Les éléments intercalaires 8 peuvent aussi revêtir d'autres formes particulières définies selon les caractéristiques d'écoulement de fluide souhaitées. De manière plus générale, le terme « ailettes » couvre des lames ou autres surfaces secondaires d'échange thermique, qui s'étendent depuis les surfaces primaires d'échange thermiques, c'est-à-dire les plaques de l'échangeur, dans les passages de l'échangeur.

Lors de la fabrication de l'échangeur 1, on approvisionne un ensemble de plaques 2 que l'on empile parallèlement entre elles et à la direction longitudinale z. Les plaques 2 sont espacées les unes des autres par les barres de fermetures 6. Après assemblage des autres éléments constitutifs de l'échangeurs, notamment les ondes d'échanges, les ondes de distribution..., l'empilement est brasé afin de solidariser les éléments de l'échangeurs les unes ou autres. De préférence, les plaques et tout ou partie des autres éléments constitutifs de l'échangeur sont en aluminium ou en alliage d'aluminium.

Selon l'invention, au moins une des plaques 2 de l'échangeur est formée par superposition d'au moins un premier produit plat 21 et un deuxième produit plat 22 l'un sur l'autre. Les premier et deuxième produits plats 21, 22 sont brasés ensemble, et avec les autres plaques 2 qui sont aussi brasées entre elles. De préférence, on brase simultanément la plaque 2 formée par la superposition des produits plats et les autres plaques 2 de l'échangeur. Il est aussi envisageable de procéder au brasage des produits plats entre eux puis de les empiler avec les autres plaques 2 et de procéder au brasage de cet empilement.

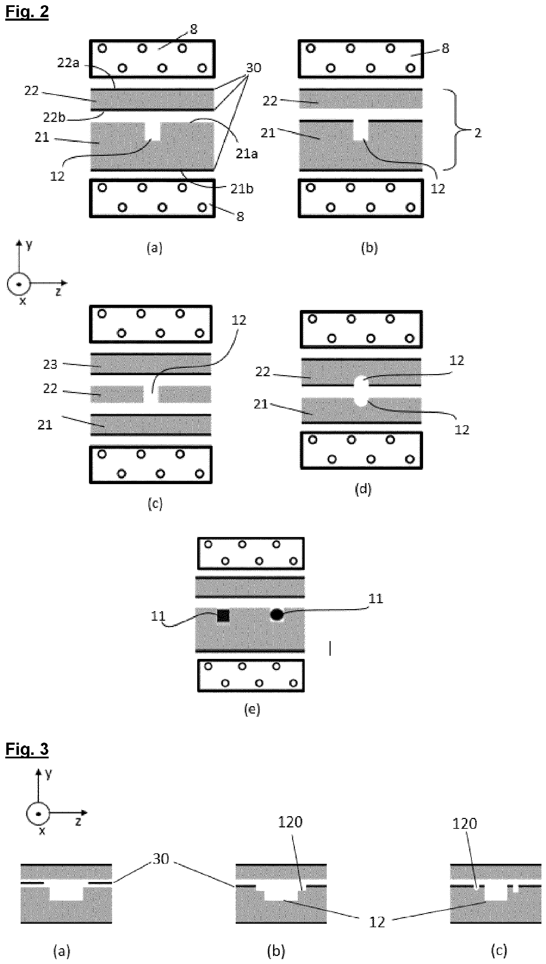

Comme on le voit sur les exemples de la Figure 2, au moins l'un des premier et deuxième produits plats 21, 22 comprend au moins une rainure 12. Par rainure, on peut entendre également une saignée, une fente ou un évidement pratiqué dans l'épaisseur de la plaque 2. La rainure 12 s'étend parallèlement aux plaques 2 et débouche vers l'extérieur de l'empilement par au moins une ouverture 5 située sur un bord latéral ou longitudinal 4a, 4b du premier produit plat ou du deuxième produit plat, suivant le produit plat dans lequel la rainure est ménagée. Lorsque le premier produit plat et le deuxième produit plat sont superposés, la rainure 12 forme une cavité au sein de la plaque 2 résultant de l'ensemble 21, 22 qui est configurée pour recevoir par la suite au moins une sonde de température 14. Notons que sur les Figures 2 à 5, on a représenté des ondes 8 droites perforées agencées dans les passages de l'échangeurs situés de part et d'autre de la plaque 2. Bien entendu, tout type d'ondes est envisageable, notamment des ondes droites non perforées, des ondes à arête de hareng pour « herringbone » en anglais, également appelées ondes ondulées pour « wavy » en anglais, des ondes à décalage partiel...

Dans le cadre de la présente invention, la sonde de température 14 peut être toute sonde configurée pour réaliser des mesures de température par contact. En particulier, la sonde de température 14 peut être une sonde de température par résistance, par exemple une sonde à résistance, notamment à résistance de platine du type PT100, ou bien une sonde de température à thermocouple ou à thermistance. Notons que la sonde 14 introduite dans la rainure s'entend d'au moins la partie thermosensible d'un système de capteur, notamment le circuit résistif dans le cas d'une mesure par résistance ou la jonction de mesure entre les deux fils conducteurs d'un thermocouple, jonction également dénommée soudure chaude. Les autres éléments du capteur nécessaires à la prise de mesure, notamment un dispositif d'alimentation électrique, un dispositif de mesure de tension électrique sont agencés à l'extérieur de l'empilement et reliés à la sonde 14 par des fils conducteurs appropriés, tels des fils de cuivre, de thermocouple ou des câbles de prolongation) Dans le cas d'une sonde de température 14 à thermocouple, la sonde 14 peut comprendre deux fils conducteurs électriques soudés à une extrémité pour former la jonction de mesure, les fils étant agencés dans la rainure 12 nus ou dans une gaine protectrice, de forme généralement cylindrique.

Lors du brasage, la liaison des éléments constitutifs de l'échangeur est réalisée par brasage avec utilisation d'un métal d'apport, appelé brasure ou agent de brasage 30, ayant une température de fusion prédéterminée. La température de fusion prédéterminée est comprise entre 550 et 900 °C, de préférence encore comprise entre 550 et 650 °C.

L'assemblage est obtenu par fusion et diffusion de l'agent de brasage 30 au sein des pièces à braser, sans fusion de celles-ci. L'agent de brasage 30 peut se présenter sous la forme de couches de revêtement déposées, généralement par co-laminage ou éventuellement sous la forme d'un revêtement liquide ou d'un gel déposé à la main, sur des surfaces des plaques ou sous la forme de feuilles ou feuillards disposées entre les plaques. Les plaques, les éléments intercalaires à ailettes et les autres éléments constitutifs de l'échangeur sont plaqués les uns contre les autres par un dispositif de compression appliquant une force de compression aux plaques 2, comprise typiquement entre 20 000 à 40 000 N/m². L'empilement est introduit dans un four sous vide et brasé à des températures qui peuvent être comprises entre 550 et 900 °C, de préférence comprises entre 550 et 650 °C.

Afin d'éviter que l'agent de brasage 30, lors de sa fusion, ne comble la rainure 12, on agence au moins une cale amovible 11 dans la rainure 12. Notons que la cale amovible 11 peut être placée dans la rainure 12 soit avant de superposer les produits plats ou une fois que les produits plats sont superposés, par l'ouverture 5. De préférence, la cale 11 est placée dans la rainure après que les produits plats aient été empilés et maintenus serrés l'un contre l'autre par une force de compression, en vue du brasage ultérieur de l'empilement. Ainsi, on s'assure que les produits plats sont bien en contact l'un avec l'autre avant d'introduire la cale et on évite de déplacer un élément de l'empilement lors de l'insertion de la cale 11, ce qui pourrait compromettre l'intégrité de la matrice brasée et de là le fonctionnement de l'échangeur. Cela permet aussi de vérifier que la cale n'a pas des dimensions trop importantes par rapport aux dimensions de la rainure.

Notons que s'il y a plusieurs rainures 12, il peut y avoir au moins une cale amovible 11 prévue par rainure 12. Les cales amovibles peuvent être distinctes les unes ou autres ou bien tout ou partie des cales sont reliées entre elles, par exemple à la manière d'un peigne dont les dents formeraient les cales, la partie commune reliant les dents étant agencée à l'extérieur de l'empilement.

Les plaques 2 sont brasées avec la cale amovible 11 placée dans la rainure 12. De préférence, la cale amovible 11 est formée en tout ou partie d'un premier matériau ayant une température de fusion supérieure à ladite température prédéterminée. Ainsi, la cale amovible 11 n'est pas brasée avec les produits plats et peut être retirée aisément par la suite, ce qui réduit le risque d'endommager ou de déformer les produits plats entre lesquels il était inséré. Par exemple, le premier matériau peut être un alliage de fer, tel de l'acier inoxydable. L'agent de brasage 30 est de préférence de l'aluminium ou un alliage d'aluminium.

De façon alternative ou complémentaire, la cale amovible 11 peut être recouverte en tout ou partie d'un produit de revêtement configuré pour former, à l'étape d), une barrière de diffusion de l'agent de brasage 30 dans le premier matériau de la cale amovible 11. Cela permet de faciliter le retrait de la cale en limitant l'accroche de la brasure. Ainsi, le procédé peut comprendre une étape où la cale 11 est recouverte d'un produit empêchant ou limitant le brasage pendant la phase de brasage, telle STOP-OFF ^{®} ou le nitrure de bore.

On peut aussi envisager une cale amovible 11 comprenant une partie interne formée d'un deuxième matériau et une partie externe formée du premier matériau, le deuxième matériau ayant une température de fusion inférieure à la température de fusion du premier matériau. La partie externe joue le rôle d'isolant empêchant le brasage de la partie interne aux produits plats adjacents. On dispose ainsi d'un plus grand degré de liberté quant au choix du matériau de la partie interne qui peut éventuellement présenter une température de fusion inférieure ou égale à la température de fusion prédéterminée. Par exemple, la partie externe peut être formée d'un alliage de fer, en particulier d'acier inoxydable. La partie interne peut être formée d'aluminium ou d'un alliage d'aluminium.

La cale amovible 11 peut être une pièce massive ou creuse, se présenter sous la forme de tige ou de tube et présenter différentes formes de section transversale, notamment circulaire, carrée, hexagonale...

Après l'assemblage de l'empilement par brasage, on retire la cale amovible 11 de la rainure 12 par l'ouverture 5 et on introduit une sonde de température 14 dans la rainure 12 dont l'espace a été laissé libre grâce à la cale 11. La sonde de température 14 peut être introduite directement dans la rainure, sans qu'il ne soit nécessaire d'utiliser une pièce intermédiaire de maintien entre la sonde et les premier et deuxième produits plats. Cela minimise la résistance thermique entre la sonde et les produits plats, ce qui améliore grandement la précision de la mesure. De plus, le brasage des premier et deuxième produits plats entre eux assure un excellent contact du point de vue thermique et minimise la résistance thermique entre ces deux éléments, ce qui permet de ne pas nuire aux performances de l'échangeur en fonctionnement. La sonde de température est introduite de façon non intrusive au sein de l'échangeur. La sonde est incluse dans une plaque 2 de l'échangeur, ce qui permet de mesurer une température locale dans l'échangeur. On minimise également l'encombrement du dispositif.

La Figure 2 représente différents modes de réalisation de produits plats et de rainures. Les rainures 12 peuvent notamment présenter, en coupe transversale dans un plan orthogonal à la direction longitudinale z, des sections transversales de forme carrée, rectangulaire ou semi-circulaire.

On pourra adapter la forme des rainures en fonction de la forme de la sonde 14 à loger. On pourra aussi adapter la profondeur des rainures 12 et/ou l'épaisseur des produits plats pour s'adapter aux dimensions de la sonde 14 et pour placer la sonde 14 à une hauteur prédéterminée au sein de la plaque 2, la hauteur étant mesurée parallèlement à la direction d'empilement y.

Les produits plats forment ensemble une plaque 2 et des éléments intercalaires 8 sont agencés dans les passages de fluides formés de part et d'autre de la plaque 2. Le premier produit plat 21 comprend une première paire de surfaces opposées 21a, 21b et le deuxième produit plat 22 comprend une deuxième paire de surfaces opposées 22a, 22b. Ces surfaces ne sont indiquées qu'en (a) par simplicité.

De préférence, un agent de brasage 30 est agencé entre les plaques 2 ainsi qu'entre les produits plats.

De préférence, au moins les surfaces des produits plats orientées du côté des éléments intercalaires 2 et au moins l'une des surfaces d'un produit plat orientée vers l'autre produit plat comprend un agent de brasage 30. Il est aussi possible que les deux surfaces des produits plats agencées l'une en regard de l'autre comprennent un agent de brasage 30.

La Figure 2(a) illustre le cas d'un premier produit plat 21 comprenant une rainure 12 débouchant au niveau de la surface 21a de la première paire orientée du côté du deuxième produit plat 22. L'agent de brasage 30 est disposé sur la surface 22b du deuxième produit 22 orientée du côté de la rainure 12. Selon une autre possibilité illustrée en (b), l'agent de brasage 30 est disposé sur la surface 21a au niveau de laquelle la rainure 12 débouche. Dans ce cas, on évite de préférence que de l'agent de brasage 30 ne se trouve au niveau de la rainure 12 afin de limiter la quantité d'agent de brasage pénétrant dans la rainure 12 lors du brasage. Si le premier plat est enduit d'agent de brasage, alors l'usinage de la rainure sur cette surface permet de retirer l'agent de brasage. Si l'agent de brasage est sous la forme d'une feuille placée entre les deux produits plats, on fait en sorte que cette feuille ne s'étendant pas en regard de la rainure 12.

La Figure 2(e) illustre des cales 11 de section carrée ou circulaire.

Selon une possibilité, illustrée par la Figure 2(d) le deuxième produit plat 22 peut aussi comprendre au moins une rainure 12 agencée en regard de ladite au moins une rainure 12 du premier produit plat 21 et débouchant au niveau de celle 22b des surfaces de la deuxième paire orientée du côté du premier produit plat 21. Avantageusement, les deux rainures 12 présentent une section transversale de forme semi-circulaire. Une telle configuration est particulièrement adaptée à la mise en place d'une sonde 14 de forme cylindrique.

La Figure 2(d) illustre le cas où la plaque 2 dans laquelle est réalisée la mesure de température est formée en superposant un premier produit plat 21, un deuxième produit plat 22 et un produit plat supplémentaire 23 les uns sur les autres. Le deuxième produit plat 22 étant agencé entre le premier produit plat 21 et le produit plat supplémentaire 23.

Selon un mode de réalisation, le deuxième produit plat 22 comprend une rainure 12 traversante. Cela permet de contrôler précisément le positionnement symétrique de la sonde dans la plaque lorsque l'on veut mesurer la température au centre de la plaque 2.

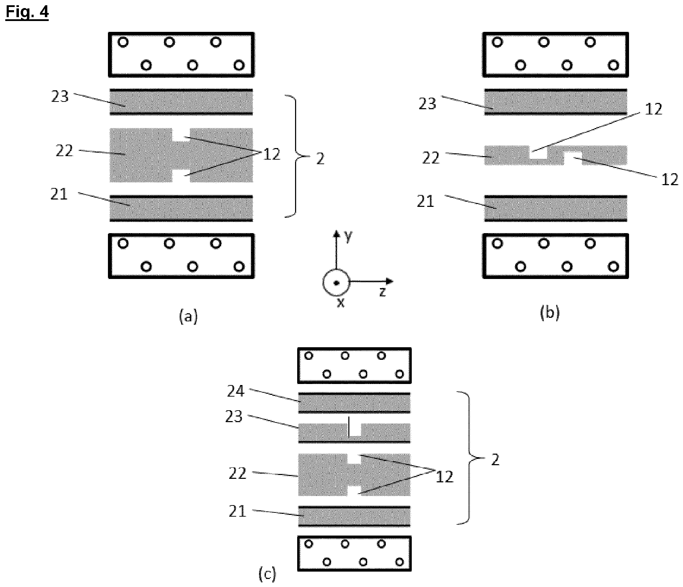

Selon un autre mode de réalisation, illustré sur la Figure 4, le deuxième produit plat 22 comprend au moins deux rainures 12 dont l'une débouche au niveau de la surface 22b de la deuxième paire orientée du côté du premier produit plat 21 et l'autre débouche au niveau de la surface 22a de la deuxième paire orientée du côté du produit plat supplémentaire 23. Cela permet l'implantation de deux sondes de température 14 à différentes hauteurs au sein de la plaque 2. A partir de la différence des températures mesurées par chacun des sondes, on peut déduire le flux thermique passant à travers la plaque 2, la plaque 2 jouant le rôle de résistance thermique. De préférence, les deux rainures 12 sont disposées de part et d'autre et à égale distance du plan médian de la plaque 2, c'est-à-dire le plan qui est parallèle aux plaques 2 de l'empilement et qui est agencé, suivant la direction d'empilement y, à mi-hauteur de la plaque 2 formée par l'empilement de produits plats 21, 22, 23. Les sondes agencées par la suite sont aussi positionnés de cette façon. Cela permet de mesurer la différence de température qui est générée à travers la plaque, ce qui conduit directement ou indirectement à la détermination du flux thermique traversant la plaque.

L'épaisseur du deuxième produit plat 22 dans laquelle sont insérées les sondes, la distance entre les sondes et leur précision peuvent être sélectionnés afin de correspondre à la précision et à la sensibilité de mesure souhaitées.

Selon une possibilité, visible sur la Figure 4 en (a), les rainures 12 de la paire de rainures sont agencée en coïncidence l'une au-dessus de l'autre mais à des hauteurs différentes au sein de la plaque 2. Les sondes 14 insérées par la suite sont ainsi positionnés en regard l'un de l'autre. La différence de température entre les deux sondes est alors fonction du flux thermique perpendiculaire au plan médian.

Selon une autre possibilité, visible en (b), les rainures 12 sont décalées l'une par rapport à l'autre dans un plan parallèle aux plaques 2. Cela permet d'utiliser un deuxième produit plat de plus faible épaisseur, et donc de limiter la résistance thermique du deuxième produit plat et de na pas impacter la performance de l'échangeur.

Selon une autre possibilité, visible en (c), il est possible d'agencer plus de deux sondes 14 à des hauteurs différentes au sein de la plaque formée par les produits plats, en utilisant plusieurs produits plats supplémentaires. En fait, on ajoute dans l'empilement autant de produits plats supplémentaires que de sondes supplémentaires souhaitées. Cela permet de mesurer le gradient thermique avec plus de deux points de mesure, ce qui améliore encore la précision de la mesure. Cet arrangement est aussi plus robuste, et permet de détecter si l'une des sondes est défaillante.

Ainsi, dans l'exemple de la Figure 4 (c), deux produits plats supplémentaires 23, 24 sont superposés sur le deuxième produit plat 22. L'un des produits plats supplémentaires 23, 24 comprend au moins une rainure 12 débouchant du côté de l'autre des produits supplémentaires 23, 24. Ce mode de superposition permet d'agencer trois 3 sondes l'une au-dessus de l'autre.

La Figure 3 schématise d'autres arrangements possibles de produits plats superposés pour former une plaque 2 selon l'invention. Comme montré en (b) et (c), des évidements 120, tels des tranchées ou des fentes, peuvent être pratiqués dans le premier produit plat 21 et/ou le deuxième produit plat 22 de part et d'autre de ladite au moins une rainure 12. Cela permet, au cours de la phase de brasage, de recueillir un éventuel excès de brasure et ainsi de préserver l'intégrité des logements prévus pour les sondes.

Dans le cas où l'agent de brasage n'est pas co-laminée sur les produits plats, on peut n'agencer l'agent de brasage qu'à une certaine distance de la rainure 12, comme montré en (a). Si les produits plats sont déjà recouverts d'agent de brasage, la réalisation de la rainure 12 peut inclure une étape de retrait de l'agent de brasage sur une certaine distance de part et d'autre de la rainure.

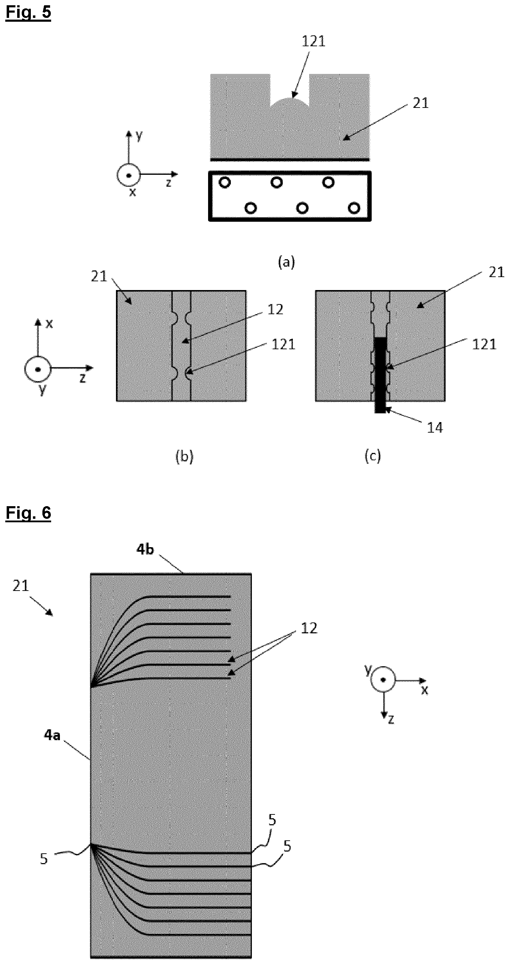

La Figure 5 schématise des modes de réalisations dans lesquels des bossages 121 sont aménagés sur la paroi interne d'une rainure 12 de façon à réduire localement la section transversale de la rainure 12. Cela permet de faciliter le coulissement de la sonde lors de son introduction en réduisant la surface de contact entre la sonde et la paroi interne de la rainure. Cela facilite également le retrait de la cale amovible 11 après le brasage. Notons qu'il est aussi envisageable qu'au moins une portion de surface de la paroi interne présente des aspérités.

Comme ces rétrécissements locaux peuvent diminuer le contact thermique entre la sonde et la plaque, on peut les supprimer localement dans la zone où la température doit être mesurée, afin d'améliorer la représentativité de la mesure. Les bossages peuvent aussi être exagérés dans les zones où une isolation thermique est préférable, par exemple du fait que la plaque 2 a, dans cette zone, une température très différente de ce que l'on cherche à mesurer.

Notons que ladite au moins une rainure 12 peut déboucher soit par une seule ouverture situées sur un bord de la plaque 2, soit d'une part par une ouverture 5 d'un bord longitudinal 4a ou latéral 4b et d'autre part par une ouverture 5 du bord longitudinal 4a ou latéral 4b opposé. De préférence lesdites ouvertures 5 sont agencées sur deux bords longitudinaux 4a opposés. Ainsi, la rainure 12 traverse des régions de températures sensiblement égales, ce qui permet d'éviter de perturber localement le champ de température par l'apport de chaleur par la sonde elle-même.

On peut éventuellement agencer deux cales 11 dans la rainure 12, chacune étant retirée par une des ouvertures 5 et/ou placer deux sondes 14 dans la rainure 12, chacun étant inséré par une des ouvertures 5.

Si l'un et/ou l'autre produit plat comprend plusieurs rainures, chacune peut déboucher sur au moins un des bords de l'échangeur par une ouverture respective distincte. Il est aussi possible que les rainures 12 se rejoignent au niveau du bord longitudinal 4a ou latéral 4b opposé pour y déboucher par une ouverture 5 commune. C'est ce que montre la Figure 6. Les rainures peuvent s'arrêter au sein de la plaque 2 (à gauche de la plaque) ou déboucher d'autre part par une pluralité d'ouvertures 5 respectives distinctes disposées le long du bord opposé (à droite de la plaque).

La Figure 6 schématise des profils possibles de rainures 12 en coupe longitudinale dans un plan parallèle aux plaques 2. De préférence, chaque rainure comprend une portion rectiligne. Chaque rainure peut comprendre plusieurs portions rectilignes formant un angle entre elles, et éventuellement au moins une portion de forme curviligne. Cela permet de regrouper plusieurs rainures jusqu'à une même ouverture 5. Les rainures 12 peuvent être au moins en partie parallèles entre elles. Un tel arrangement de plusieurs rainures permet de mesurer des températures et des flux thermiques à différentes positions dans la longueur de l'échangeur, notamment pour déterminer où ont lieu différentes réactions ou changement de phase. On obtient ainsi une cartographie des phénomènes physico-chimiques qui peuvent se produire dans l'échangeur.

Lors de l'étape e) de retrait de la cale amovible 11, on applique de préférence une force de traction sur la cale 11 de façon à lui imposer un mouvement de translation vers l'extérieur de l'empilement. De préférence, la force de traction est dirigée suivant une direction sensiblement parallèle aux plaques 2 et perpendiculaire à la direction d'étendue du bord au niveau duquel l'ouverture 5 est aménagée.

La cale amovible 11 peut éventuellement être agencée dans la rainure 12 de manière à ce qu'une portion de la cale 11 dépasse de l'ouverture 5 vers l'extérieur de l'empilement. Ainsi, la portion qui s'étend au-delà du bord considéré forme une portion de préhension, manuelle ou mécanique, qui facilite le retrait.

On peut aussi imposer un mouvement de torsion à la cale amovible 11 de façon à entraîner une déformation d'au moins une partie de la cale amovible 11. La déformation de la cale permet d'en réduire la section transversale, et donc de faciliter son extraction. On utilise de préférence un tube creux en guise de cale 11.

La cale amovible 11 peut être déformable, ce qui facilite le mouvement de translation et le retrait, réduisant ainsi le risque d'endommager ou de déformer la plaque 2 dans laquelle elle était insérée.

De préférence, la cale amovible 11 est configurée pour subir, en tout ou partie une déformation plastique, c'est-à-dire irréversible. Ceci facilite encore le retrait de l'organe de supportage car il n'est alors pas nécessaire d'appliquer la torsion en continu.

L'étape de retrait peut aussi comprendre une étape de chauffage de la cale amovible 11. En particulier, la cale peut être chauffée fortement et localement en y faisant circuler un courant électrique. La chauffe produit une dilation de la cale avec un refroidissement subséquent qui génère le jeu nécessaire au mouvement de la cale dans la rainure 12. La chauffe peut aussi refondre localement la brasure qui aurait saisi la cale pendant le brasage.

L'étape de retrait peut aussi comprendre une étape de refroidissement de la cale amovible 11 ce qui génère, par contraction différentielle, le jeu nécessaire au mouvement de la cale dans la rainure 12.

Il est aussi envisageable, au cours de l'étape d), de mettre en contact la cale 11 avec un produit configuré pour dissoudre le matériau constitutif de la cale. Par contre, ledit produit est configuré pour ne pas dissoudre le matériau constitutif des plaques 2.

Il est à noter que, de préférence, la hauteur de la cale 11 avant l'étape de retrait est telle qu'elle s'étend dans la quasi-totalité, voire la totalité, de la hauteur de la rainure 12 suivant la direction d'empilement y, de sorte qu'il n'existe aucun ou quasiment aucun jeu entre l'organe 11 et les plaques 2 adjacentes. Ceci permet de limiter l'introduction de brasure dans la rainure 12 lors du brasage.

Optionnellement, après ou simultanément à l'introduction de la sonde de température 14 dans la rainure 12, on peut y introduire au moins un élément, tel un fil, formé d'un deuxième matériau ayant une température de fusion relativement basse, i. e. inférieure ou égale à 500 °C, de préférence inférieure ou égale à 200 °C, de préférence encore inférieure ou égale à 100 °C. Le deuxième matériau peut être choisi parmi des métaux ou alliages métalliques contenant au moins l'un des métaux suivants : Indium, Bismuth, Etain, Plomb, Cadnium, Gallium. De manière plus générale, le deuxième matériau peut être tout matériau conducteur thermique, l'emploi d'une colle thermoconductrice est ainsi envisageable.

L'élément est ensuite chauffé et fondu autour de la sonde, ce qui permet d'assurer un bon contact thermique entre l'échangeur et la sonde, même avec une sonde de forme irrégulière ou lorsque la sonde est formée de fils nus joints entre eux. En d'autres termes, on remplit avec le deuxième matériau au moins une partie de l'espace laissé libre entre la sonde et les parois interne de la rainure.

Il est aussi envisageable de couler le deuxième matériau à l'état liquide autour de la sonde 14 dans la rainure 12.

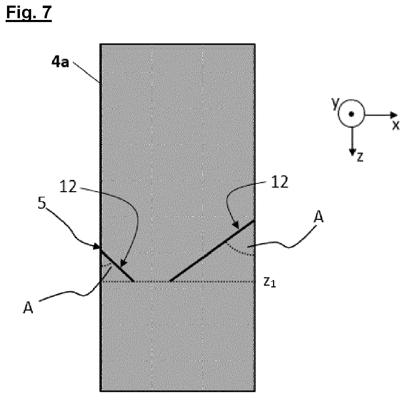

La Figure 7 schématise un mode de réalisation dans lequel l'un des premier et deuxième produits plats comprend au moins deux rainures 12 débouchant sur des bords latéraux 4b ou longitudinaux 4a opposés. La Figure 7 illustre le cas où les rainures s'étendent vers le coeur du produit plat et s'arrêtent à une position identique z₁ dans la longueur de l'échangeur. Il est aussi envisageable que les rainures 12 s'arrêtent à des hauteurs différentes. Les rainures 12 sont chacune inclinée d'un angle A compris entre 0 et 90° par rapport au bord latéral 4b ou longitudinal 4a sur lequel la rainure 12 débouche. Ainsi, il est possible, soit d'agencer puis faire fondre, soit couler directement, le deuxième matériau dans les rainures 12 situées sur chaque bord opposé en une seule fois, sans qu'il ne soit nécessaire de tourner le produit plat et de remplir une rainure après l'autre. Cela favorise l'écoulement du deuxième matériau dans les rainures. De préférence l'angle A est d'au moins 5°, de préférence compris entre 10 et 80°, de préférence encore compris entre 20° et 60°.

La présente invention permet de mesurer des flux thermiques locaux et/ou des températures locales et ainsi de remonter au coefficient d'échange thermique local, ce qui fournit des informations sur les conditions de fonctionnement locales des échangeurs thermiques. La méthode d'assemblage de la sonde est relativement simple et non intrusive.

Bien entendu, l'invention n'est pas limitée aux exemples particuliers décrits et illustrés dans la présente demande. D'autres variantes ou modes de réalisation à la portée de l'homme du métier peuvent aussi être envisagés sans sortir du cadre de l'invention définie par les revendications ci-après. On notera notamment que plusieurs plaques 2 de l'échangeur 1 peuvent être formées de produits plats et présenter au moins une rainure 12 selon l'invention, ces plaques pouvant présenter des configurations différentes, en particulier un nombre et/ou des formes de rainures différentes, un nombre d'ouvertures différent, des ouvertures agencées sur des bords différents.

## Revendications

1. Procédé de fabrication d'un échangeur de chaleur (1) du type à plaques et ailettes brasées comprenant les étapes suivantes :
a) empiler avec espacement un ensemble de plaques (2) parallèlement entre elles et à une direction longitudinale (z) de façon à définir entre lesdites plaques (2) une pluralité de passages (3) adaptés pour l'écoulement suivant la direction longitudinale (z) d'un premier fluide à mettre en relation d'échange thermique avec au moins un deuxième fluide, lesdites plaques (2) étant délimitées par une paire de bords longitudinaux (4a) s'étendant suivant la direction longitudinale (z) et une paire de bords latéraux (4b) s'étendant suivant une direction latérale (x) perpendiculaire à la direction longitudinale (z),
b) former au moins une des plaques (2) empilées à l'étape a) en superposant, suivant une direction d'empilement (y) perpendiculaire aux directions longitudinale (z) et latérale (x), au moins un premier produit plat (21) et un deuxième produit plat (22) l'un sur l'autre, au moins l'un des premier et deuxième produits plats (21, 22) comprenant au moins une rainure (12) s'étendant parallèlement aux plaques (2) et débouchant vers l'extérieur de l'empilement par au moins une ouverture (5) d'un bord latéral ou longitudinal (4a, 4b),
le procédé étant **caractérisé par** les étapes suivantes:
c) agencer au moins une cale amovible (11) dans la rainure (12),
d) braser l'ensemble de plaques (2), y compris le premier produit plat (21) sur le deuxième produit plat (22),
e) retirer la cale amovible (11) de la rainure (12) par l'ouverture (5),
f) introduire au moins une sonde de température (14) dans la rainure (12).

2. Procédé selon la revendication 1, **caractérisé en ce que** le premier produit plat (21) comprend une première paire de surfaces opposées (21a, 21b) et le deuxième produit plat (22) comprend une deuxième paire de surfaces opposées (22a, 22b), le premier produit plat (21) comprenant au moins une rainure (12) débouchant au niveau de celle (21a) des surfaces de la première paire orientée du côté du deuxième produit plat (22).

3. Procédé selon la revendication 2, **caractérisé en ce que** le deuxième produit plat (22) comprend au moins une rainure (12) agencée en regard de ladite au moins une rainure (12) du premier produit plat (21) et débouchant au niveau de celle (22b) des surfaces de la deuxième paire orientée du côté du premier produit plat (21).

4. Procédé selon l'une des revendications précédentes, **caractérisé en ce que**, à l'étape b), ladite au moins une plaque (2) est formée en superposant un premier produit plat (21), un deuxième produit plat (22) et au moins un produit plat supplémentaire (23, 24) les uns sur les autres, le deuxième produit plat (22) étant agencé entre le premier produit plat (21) et ledit produit plat supplémentaire (23).

5. Procédé selon la revendication 4, **caractérisé en ce que** le deuxième produit plat (22) comprend au moins une rainure (12) débouchant d'une part au niveau de celle (22b) des surfaces de la deuxième paire orientée du côté du premier produit plat (21) et débouchant d'autre part au niveau de celle (22a) des surfaces de la deuxième paire orientée du côté du produit plat supplémentaire (23).

6. Procédé selon la revendication 4, **caractérisé en ce que** le deuxième produit plat (22) comprend au moins deux rainures (12) agencées à des hauteurs différentes suivant la direction d'empilement (y), l'une des deux rainures débouchant au niveau de la surface (22b) de la deuxième paire orientée du côté du premier produit plat (21) et l'autre débouchant au niveau de la surface (22a) de la deuxième paire orientée du côté du produit plat supplémentaire (23).

7. Procédé selon la revendication 6, **caractérisé en ce que** les deux rainures (12) sont décalées l'une par rapport à l'autre dans un plan parallèle aux plaques (2).

8. Procédé selon l'une des revendications précédentes, **caractérisé en ce que** des évidements (120) sont pratiqués dans le premier produit plat (21) et/ou le deuxième produit plat (22) de part et d'autre de ladite au moins une rainure (12).

9. Procédé selon l'une des revendications précédentes, **caractérisé en ce que** des bossages (121) sont aménagés sur la paroi interne de ladite au moins une rainure (12) de façon à réduire localement la section transversale de la rainure (12).

10. Procédé selon l'une des revendications précédentes, **caractérisé en ce que** ladite au moins une rainure (12) débouche d'une part par une ouverture (5) d'un bord longitudinal (4a) ou latéral (4b) et d'autre part par une ouverture (5) du bord longitudinal (4a) ou latéral (4b) opposé, de préférence lesdites ouvertures (5) sont agencées sur deux bords longitudinaux (4a) opposés.

11. Procédé selon l'une des revendications précédentes, **caractérisé en ce que** l'étape e) de retrait comprend au moins l'une des sous-étapes suivantes :
i) appliquer une force de traction à la cale amovible (11) de façon à lui imposer un mouvement de translation vers l'extérieur de l'empilement,
ii) imposer un mouvement de torsion à la cale amovible (11) de façon à entraîner une déformation d'au moins une partie de la cale amovible (11),
iii) chauffer ou refroidir la cale amovible (11).

12. Procédé selon l'une des revendications précédentes, **caractérisé en ce que**, après l'étape f), on introduit un deuxième matériau dans la rainure (12) puis on fond le deuxième matériau de façon à remplir au moins une partie de l'espace autour de la sonde de température (14), de préférence le deuxième matériau ayant une température de fusion inférieure ou égale à 500 °C, de préférence inférieure ou égale à 200 °C, de préférence encore inférieure ou égale à 100 °C.

13. Echangeur de chaleur du type à plaques et ailettes brasées comprenant un ensemble de plaques (2) parallèles entre elles et à une direction longitudinale (z) de façon à définir entre lesdites plaques (2) une pluralité de passages (3) adaptés pour l'écoulement d'un premier fluide à mettre en relation d'échange thermique avec au moins un deuxième fluide, lesdits plaques (2) étant délimitées par une paire de bords longitudinaux (4a) s'étendant suivant la direction longitudinale (z) et une paire de bords latéraux (4b) s'étendant suivant une direction latérale (x) perpendiculaire à la direction longitudinale (z), au moins une des plaques (2) étant formée par au moins un premier produit plat (21) et un deuxième produit plat (22) superposés l'un sur l'autre suivant une direction d'empilement (y) perpendiculaire aux directions longitudinale (z) et latérale (x) et brasés au moyen d'un revêtement ou une feuille d'agent de brasage (30) ayant une température de fusion prédéterminée agencée sur au moins une de leurs surfaces opposées (21a, 22b), la température de fusion prédéterminée étant comprise entre 550 et 900 °C, au moins l'un des premier et deuxième produits plats (21, 22) comprenant au moins une rainure (12) s'étendant parallèlement aux plaques (2) et débouchant vers l'extérieur de l'empilement par au moins une ouverture (5) d'un bord latéral ou longitudinal (4a, 4b), de préférence par au moins une ouverture d'un bord longitudinal (4b), au moins une sonde de température (14) étant agencé dans la rainure (12),
l'échangeur étant **caractérisé par**:
un matériau ayant une température de fusion inférieure ou égale à 500 °C, de préférence inférieure ou égale à 200 °C, de préférence encore inférieure ou égale à 100 °C, étant agencé autour d'au moins une partie de la sonde (14), ladite rainure (12) étant dépourvue de tout autre moyen de maintien de ladite sonde (14) dans la rainure (12).

14. Echangeur selon la revendication 13, **caractérisé en ce que** ladite au moins une plaque (2) est formée en superposant un premier produit plat (21), un deuxième produit plat (22) et au moins un produit plat supplémentaire (23, 24) les uns sur les autres, le deuxième produit plat (22) étant agencé entre le premier produit plat (21) et ledit produit plat supplémentaire (23), le deuxième produit plat (22) comprenant au moins deux rainures (12) agencées à des hauteurs différentes suivant la direction d'empilement (y) avec chaque rainure (12) comprenant au moins une sonde (14), l'une des deux rainures débouchant au niveau de la surface (22b) de la deuxième paire orientée du côté du premier produit plat (21) et l'autre débouche débouchant au niveau de la surface (22a) de la deuxième paire orientée du côté du troisième produit plat supplémentaire (23).

15. Echangeur selon l'une des revendications 13 ou 14, **caractérisé en ce qu'**au moins l'un des premier et deuxième produits plats (21, 22) comprend au moins deux rainures (12) débouchant sur des bords latéraux (4b) ou longitudinaux (4a) opposés, chaque rainure (12) étant inclinée d'un angle (A) compris entre 0 et 90°, de préférence entre 10° et 80° par rapport au bord latéral (4b) ou longitudinal (4a) sur lequel ladite rainure (12) débouche.

## Patentansprüche

1. Verfahren zur Herstellung eines Wärmetauschers (1) des Typs mit gelöteten Platten und Rippen, umfassend die folgenden Schritte:
a) Stapeln mit Abstand einer Anordnung von Platten (2), die parallel zueinander und zu einer Längsrichtung (z) sind, so dass zwischen den Platten (2) eine Mehrzahl von Durchlässen (3) definiert wird, die zum Fließen entlang der Längsrichtung (z) eines ersten Fluids geeignet sind, das in Wärmeaustauschbeziehung mit mindestens einem zweiten Fluid zu bringen ist, wobei die Platten (2) durch ein Paar Längsränder (4a), die sich entlang der Längsrichtung (z) erstrecken, und ein Paar seitliche Ränder (4b), die sich entlang einer seitlichen Richtung (x) erstrecken, die senkrecht zu der Längsrichtung (z) verläuft, begrenzt werden,
b) Bilden mindestens einer der im Schritt a) gestapelten Platten (2), indem entlang einer Stapelrichtung (y), die senkrecht zu der Längsrichtung (z) und der seitlichen Richtung (x) verläuft, mindestens ein erstes flaches Produkt (21) und ein zweites flaches Produkt (22) übereinander gelegt werden, wobei mindestens eines der ersten und zweiten flachen Produkte (21, 22) mindestens eine Nut (12) umfasst, die sich parallel zu den Platten (2) erstreckt und nach außerhalb des Stapels hin durch mindestens eine Öffnung (5) eines seitlichen oder Längsrandes (4a, 4b) mündet, wobei das Verfahren durch die folgenden Schritte gekennzeichnet ist:
c) Anordnen mindestens eines lösbaren Keils (11) in der Nut (12),
d) Löten der Anordnung von Platten (2), einschließlich des ersten flachen Produkts (21) auf dem zweiten flachen Produkt (22),
e) Entnehmen des lösbaren Keils (11) aus der Nut (12) durch die Öffnung (5),
f) Einführen mindestens einer Temperatursonde (14) in die Nut (12).

2. Verfahren nach Anspruch 1, **dadurch gekennzeichnet, dass** das erste flache Produkt (21) ein erstes Paar entgegengesetzter Flächen (21a, 21b) umfasst und das zweite flache Produkt (22) ein zweites Paar entgegengesetzter Flächen (22a, 22b) umfasst, wobei das erste flache Produkt (21) mindestens eine Nut (12) umfasst, die an derjenigen (21a) der Flächen des ersten Paars mündet, die zu der Seite des zweiten flachen Produkts (22) gerichtet ist.

3. Verfahren nach Anspruch 2, **dadurch gekennzeichnet, dass** das zweite flache Produkt (22) mindestens eine Nut (12) umfasst, die gegenüber der mindestens einen Nut (12) des ersten flachen Produkts (21) angeordnet sind und an derjenigen (22b) der Flächen des zweiten Paars mündet, die zu der Seite des ersten flachen Produkts (21) gerichtet ist.

4. Verfahren nach einem der vorhergehenden Ansprüche, **dadurch gekennzeichnet, dass** im Schritt b) die mindestens eine Platte (2) gebildet wird, indem ein erstes flaches Produkt (21), ein zweites flaches Produkt (22) und mindestens ein zusätzliches flaches Produkt (23, 24) übereinander gelegt werden, wobei das zweite flache Produkt (22) zwischen dem ersten flachen Produkt (21) und dem zusätzlichen flachen Produkt (23) angeordnet ist.

5. Verfahren nach Anspruch 4, **dadurch gekennzeichnet, dass** das zweite flache Produkt (22) mindestens eine Nut (12) umfasst, die zum einen an derjenigen (22b) der Flächen des zweiten Paars mündet, die zu der Seite des ersten flachen Produkts (21) gerichtet ist, und zum anderen an derjenigen (22a) der Flächen des zweiten Paars mündet, die zu der Seite des zusätzlichen flachen Produkts (23) gerichtet ist.

6. Verfahren nach Anspruch 4, **dadurch gekennzeichnet, dass** das zweite flache Produkt (22) mindestens zwei Nuten (12) umfasst, auf unterschiedlichen Höhen entlang der Stapelrichtung (y) angeordnet sind, wobei die eine der beiden Nuten an der Fläche (22b) des zweiten Paars mündet, die zu der Seite des ersten flachen Produkts (21) gerichtet ist, und wobei die andere an der Fläche (22a) des zweiten Paars mündet, die zu der Seite des zusätzlichen flachen Produkts (23) gerichtet ist.

7. Verfahren nach Anspruch 6, **dadurch gekennzeichnet, dass** die beiden Nuten (12) in einer parallel zu den Platten (2) verlaufenden Ebene zueinander versetzt sind.

8. Verfahren nach einem der vorhergehenden Ansprüche, **dadurch gekennzeichnet, dass** Ausnehmungen (120) in dem ersten flachen Produkt (21) und/oder dem zweiten flachen Produkt (22) beidseits der mindestens einen Nut (12) ausgearbeitet sind.

9. Verfahren nach einem der vorhergehenden Ansprüche, **dadurch gekennzeichnet, dass** Erhebungen (121) an der Innenwand der mindestens einen Nut (12) ausgebildet sind, so dass der Querschnitt der Nut (12) lokal reduziert wird.

10. Verfahren nach einem der vorhergehenden Ansprüche, **dadurch gekennzeichnet, dass** die mindestens eine Nut (12) zum einen durch eine Öffnung (5) eines Längsrandes (4a) oder seitlichen Randes (4b) und zum anderen durch eine Öffnung (5) des entgegengesetzten Längsrandes (4a) oder seitlichen Randes (4b) mündet, die Öffnungen (5) bevorzugt an zwei entgegengesetzten Längsrändern (4a) angeordnet sind.

11. Verfahren nach einem der vorhergehenden Ansprüche, **dadurch gekennzeichnet, dass** der Schritt e) des Entnehmens mindestens einen der folgenden Teilschritte umfasst:
i) Ausüben einer Zugkraft auf den lösbaren Keil (11), so dass ihm eine translatorische Bewegung nach außerhalb des Stapels hin auferlegt wird,
ii) Auferlegen einer Torsionsbewegung auf den lösbaren Keil (11), so dass eine Verformung mindestens eines Teils des lösbaren Keils (11) herbeigeführt wird,
iii) Erwärmen oder Kühlen des lösbaren Keils (11).

12. Verfahren nach einem der vorhergehenden Ansprüche, **dadurch gekennzeichnet, dass** nach dem Schritt f) ein zweites Material in die Nut (12) eingeführt wird, dann das zweite Material geschmolzen wird, so dass mindestens ein Teil des Raums um die Temperatursonde (14) herum gefüllt wird, wobei das zweite Material bevorzugt eine Schmelztemperatur kleiner als oder gleich 500 °C, bevorzugt kleiner als oder gleich 200 °C, noch bevorzugter kleiner als oder gleich 100 °C hat.

13. Wärmetauscher des Typs mit gelöteten Platten und Rippen, umfassend eine Anordnung von Platten (2), die parallel zueinander und zu einer Längsrichtung (z) sind, so dass zwischen den Platten (2) eine Mehrzahl von Durchlässen (3) definiert wird, die zum Fließen eines ersten Fluids geeignet sind, das in Wärmeaustauschbeziehung mit mindestens einem zweiten Fluid zu bringen ist, wobei die Platten (2) durch ein Paar Längsränder (4a), die sich entlang der Längsrichtung (z) erstrecken, und ein Paar seitliche Ränder (4b), die sich entlang einer seitlichen Richtung (x) erstrecken, die senkrecht zu der Längsrichtung (z) verläuft, begrenzt werden, wobei mindestens eine der Platten (2) durch mindestens ein erstes flaches Produkt (21) und ein zweites flaches Produkt (22) gebildet wird, die entlang einer Stapelrichtung (y), die senkrecht zu der Längsrichtung (z) und seitlichen Richtung (x) verläuft, übereinander gelegt werden und mittels eines Überzugs oder einer Folie aus Lotmittel (30), das eine vorbestimmte Schmelztemperatur hat und auf mindestens einer ihrer entgegengesetzten Flächen (21a, 22b) angeordnet ist, gelötet werden, wobei die vorbestimmte Schmelztemperatur zwischen 550 und 900 °C beträgt, wobei mindestens eines der ersten und zweiten flachen Produkte (21, 22) mindestens eine Nut (12) umfasst, die sich parallel zu den Platten (2) erstreckt und nach außerhalb des Stapels hin durch mindestens eine Öffnung (5) eines seitlichen oder Längsrandes (4a, 4b), bevorzugt durch mindestens eine Öffnung eines Längsrandes (4b), mündet, wobei mindestens eine Temperatursonde (14) in der Nut (12) angeordnet ist, wobei der Tauscher **gekennzeichnet ist durch**:
ein Material, das eine Schmelztemperatur kleiner als oder gleich 500 °C, bevorzugt kleiner als oder gleich 200 °C, noch bevorzugter kleiner als oder 100 °C hat und um mindestens einen Teil der Sonde (14) herum angeordnet ist, wobei die Nut (12) kein anders Mittel zum Halten der Sonde (14) in der Nut (12) aufweist.

14. Tauscher nach Anspruch 13, **dadurch gekennzeichnet, dass** die mindestens eine Platte (2) gebildet wird, indem ein erstes flaches Produkt (21), ein zweites flaches Produkt (22) und mindestens ein zusätzliches flaches Produkt (23, 24) übereinander gelegt werden, wobei das zweite flache Produkt (22) zwischen dem ersten flachen Produkt (21) und dem zusätzlichen flachen Produkt (23) angeordnet sind, wobei das zweite flache Produkt (22) mindestens zwei Nuten (12) umfasst, die auf unterschiedlichen Höhen entlang der Stapelrichtung (y) angeordnet sind, wobei jede Nut (12) mindestens eine Sonde (14) umfasst, wobei die eine der Nuten an der Fläche (22b) des zweiten Paars mündet, die zu der Seite des ersten flachen Produkts (21) gerichtet ist, und wobei die andere an der Fläche (22a) des zweiten Paars mündet, die zu der Seite des dritten zusätzlichen flachen Produkts (23) gerichtet ist.

15. Tauscher nach einem der Ansprüche 13 oder 14, **dadurch gekennzeichnet, dass** mindestens eines der ersten und zweiten flachen Produkte (21, 22) mindestens zwei Nuten (12) umfasst, die an entgegengesetzten seitlichen Rändern (4b) oder Längsrändern (4a) münden, wobei jede Nut (12) um einen Winkel (A) zwischen 0 und 90°, bevorzugt zwischen 10° und 80°, in Bezug auf den seitlichen Rand (4a) oder Längsrand (4a), an dem die Nut (12) mündet, geneigt ist.

## Claims

1. Method for manufacturing a heat exchanger (1) of the brazed plate and fin type, comprising the following steps:
a) stacking, with spacings between them, a set of plates (2) parallel to one another and to a longitudinal direction (z) so as to define, between said plates (2), a plurality of passages (3) suitable for the flow in the longitudinal direction (z) of a first fluid to be brought into a heat-exchange relationship with at least a second fluid, said plates (2) being delimited by a pair of longitudinal edges (4a) extending in the longitudinal direction (z) and a pair of lateral edges (4b) extending in a lateral direction (x) perpendicular to the longitudinal direction (z),
b) forming at least one of the plates (2) stacked in step a) by superposing, in a stacking direction (y) perpendicular to the longitudinal (z) and lateral (x) directions, at least a first flat product (21) and a second flat product (22) on top of one another, at least one of the first and second flat products (21, 22) comprising at least one groove (12) that extends parallel to the plates (2) and leads towards the outside of the stack through at least one opening (5) in a lateral or longitudinal edge (4a, 4b), the method being **characterized by** the following steps:
c) arranging at least one removable shim (11) in the groove (12),
d) brazing the set of plates (2), including the first flat product (21), to the second flat product (22),
e) taking the removable shim (11) out of the groove (12) via the opening (5),
f) introducing at least one temperature probe (14) into the groove (12).

2. Method according to Claim 1, **characterized in that** the first flat product (21) comprises a first pair of opposite surfaces (21a, 21b) and the second flat product (22) comprises a second pair of opposite surfaces (22a, 22b), the first flat product (21) comprising at least one groove (12) leading out at that surface (21a) of the surfaces of the first pair that is oriented towards the second flat product (22).

3. Method according to Claim 2, **characterized in that** the second flat product (22) comprises at least one groove (12) which is arranged facing said at least one groove (12) of the first flat product (21) and leads out at that surface (22b) of the surfaces of the second pair that is oriented towards the first flat product (21).

4. Method according to one of the preceding claims, **characterized in that**, in step b), said at least one plate (2) is formed by superposing a first flat product (21), a second flat product (22) and at least one additional flat product (23, 24) on top of one another, the second flat product (22) being arranged between the first flat product (21) and said additional flat product (23) .

5. Method according to Claim 4, **characterized in that** the second flat product (22) comprises at least one groove (12) which on one side leads out at that surface (22b) of the surfaces of the second pair that is oriented towards the first flat product (21) and on the other side leads out at that surface (22a) of the surfaces of the second pair that is oriented towards the additional flat product (23).

6. Method according to Claim 4, **characterized in that** the second flat product (22) comprises at least two grooves (12) arranged at different heights in the stacking direction (y), one of the two grooves emerging at the surface (22b) of the second pair that is oriented towards the first flat product (21) and the other one of the two grooves emerging at the surface (22a) of the second pair that is oriented towards the additional flat product (23).

7. Method according to Claim 6, **characterized in that** the two grooves (12) are offset with respect to one another in a plane parallel to the plates (2).

8. Method according to one of the preceding claims, **characterized in that** recesses (120) are made in the first flat product (21) and/or the second flat product (22) on either side of said at least one groove (12).

9. Method according to one of the preceding claims, **characterized in that** bosses (121) are formed on the internal wall of said at least one groove (12) so as to locally reduce the cross section of the groove (12).

10. Method according to one of the preceding claims, **characterized in that** said at least one groove (12) on one side leads out through an opening (5) in a longitudinal (4a) or lateral (4b) edge and on the other side through an opening (5) in the opposite longitudinal (4a) or lateral (4b) edge, preferably said openings (5) are arranged on two opposite longitudinal edges (4a).

11. Method according to one of the preceding claims, **characterized in that** the taking-out step, step e), comprises at least one of the following sub-steps:
i) applying a pulling force to the removable shim (11) so as to make it move in translation towards the outside of the stack,
ii) making the detachable shim (11) move twistingly so as to cause deformation of at least one portion of the removable shim (11),
iii) heating or cooling the removable shim (11).

12. Method according to one of the preceding claims, **characterized in that**, after step f), a second material is introduced into the groove (12), and then the second material is melted so as to fill at least a part of the space around the temperature probe (14), the second material preferably having a melting point less than or equal to 500°C, preferably less than or equal to 200°C, more preferably less than or equal to 100°C.

13. Heat exchanger of the brazed plate and fin type, comprising a set of plates (2) that are parallel to one another and to a longitudinal direction (z) so as to define, between said plates (2), a plurality of passages (3) suitable for the flow of a first fluid to be brought into a heat-exchange relationship with at least a second fluid, said plates (2) being delimited by a pair of longitudinal edges (4a) extending in the longitudinal direction (z) and a pair of lateral edges (4b) extending in a lateral direction (x) perpendicular to the longitudinal direction (z), at least one of the plates (2) being formed by at least a first flat product (21) and a second flat product (22) that are superposed on top of one another in a stacking direction (y) perpendicular to the longitudinal (z) and lateral (x) directions and brazed by means of a coating or a sheet of braze material (30) having a predetermined melting point that is arranged on at least one of the opposite surfaces (21a, 22b) thereof, the predetermined melting point being between 550 and 900°C, at least one of the first and second flat products (21, 22) comprising at least one groove (12) that extends parallel to the plates (2) and leads towards the outside of the stack through at least one opening (5) in a lateral or longitudinal edge (4a, 4b), preferably through at least one opening in a longitudinal edge (4b), at least one temperature probe (14) being arranged in the groove (12), the exchanger being **characterized by**:
a material having a melting point less than or equal to 500°C, preferably less than or equal to 200°C, more preferably less than or equal to 100°C, being arranged around at least a part of the probe (14), said groove (12) not having any other means for holding said probe (14) in the groove (12).

14. Exchanger according to Claim 13, **characterized in that** said at least one plate (2) is formed by superposing a first flat product (21), a second flat product (22) and at least one additional flat product (23, 24) on top of one another, the second flat product (22) being arranged between the first flat product (21) and said additional flat product (23), the second flat product (22) comprising at least two grooves (12) arranged at different heights in the stacking direction (y), with each groove (12) comprising at least one probe (14), one of the two grooves leading out at that surface (22b) of the second pair that is oriented towards the first flat product (21) and the other leading out at that surface (22a) of the second pair that is oriented towards the additional, third flat product (23).

15. Exchanger according to either of Claims 13 and 14, **characterized in that** at least one of the first and second flat products (21, 22) comprises at least two grooves (12) leading out at opposite lateral (4b) or longitudinal (4a) edges, each groove (12) being inclined by an angle (A) of between 0° and 90°, preferably between 10° and 80°, with respect to the lateral (4b) or longitudinal (4a) edge at which said groove (12) leads out.
